# EUROPEAN PATENT SPECIFICATION

(11) **EP 1 470 087 B1**
(45) Date of publication and mention of the grant of the patent: **03.01.2007**
(21) Application number: 03729501.1
(22) Date of filing: 14.01.2003
(51) Int. Cl.: C03B 37/029

(54) **SEALING A FIBER DRAWING FURNACE**
VERSIEGELUNG EINES FASERZIEHOFENS
ETANCHEIFICATION D'UN FOUR DE FIBRAGE

(30) Priority: 18.01.2002 FI 20020103
(43) Date of publication of application: 27.10.2004
(73) Proprietor: Photonium OY, 08700 Virkkala (FI)
(72) Inventor: MATTILA, Timo, FIN-02230 Espoo (FI)
(74) Representative: Rönkkö, Taina Mirjam
(86) International application number: PCT/FI2003/000020
(87) International publication number: WO 2003/059831

(56) References cited:
- EP-A1- 1 112 978
- WO-A1-00/50351
- JP-A- 53 024 429
- US-A- 4 174 842
- US-A- 5 897 681

## Description

The invention relates to a drawing furnace for manufacturing optical fiber according to the preamble of the appended claim 1.

The manufacture of optical fiber can be roughly divided into two different phases. A fiber preform is manufactured in the first phase. The fiber preform is a relatively short, rigid and thick quartz glass bar, to which the optical properties of the fiber being manufactured, i.e. a refractive index distribution in the radial direction of the fiber, are formed in connection with the manufacture of said preform. In the next phase the preform is placed in a so-called drawing furnace, wherein the fiber preform is drawn to a thin and flexible optical fiber. In connection with the drawing of fiber, the fiber is also typically coated with one or more buffer coatings before it is reeled up for storage.

In a drawing furnace, which is in a vertical position, the lower end of the fiber preform, which is placed vertically inside the furnace, is typically heated to a temperature of approximately 2000 °C with a heating element, which surrounds the fiber preform symmetrically in the horizontal plane. This heating element is typically made of graphite material, the heating of which is arranged to take place inductively. When the lower end of the fiber preform reaches a temperature which is high enough, gravity draws the fused quartz glass, which is partly in liquid condition, downwards, in which case this fiber is thus formed in a continuous process. The diameter of the optical fiber that is formed in the manner described above can be controlled e.g. by adjusting the heating of the fiber preform and by affecting the winding speed, i.e. the drawing speed.

In the manufacture of optical fiber with a drawing furnace, impurities, which drift to the fiber as fine particles, form a significant and well-known problem as such. These particles may originate either from outside or inside the drawing furnace. Typically the impurities originating from the inside of the drawing furnace loosen from the heating element, insulating material or other high temperature parts of the furnace. The particles are typically, for example, silicon carbide or carbon. The glass material loosening from the fiber preform itself may form particles, which disturb the process. When meeting the fused quartz glass forming into fiber, the impurity particles mentioned above cause local faults (discontinuity) in the fiber, which affect the strength of the fiber and may at a later stage cause, for example, the fiber to break.

For example, patent publication US 4547644 A discloses these abovementioned problems caused by impurity particles in fiber drawing. As a solution to the problem, said publication presents sealing means, which have been arranged to the upper and lower ends of the heating element in connection with the insulating layer surrounding the tubular heating element of the drawing furnace, and which are used to decrease the flow of impurity particles to the inside of the furnace. US patent 4547644 presents a solution, which is substantially based on the circular cover structure placed in the upper part of the drawing furnace, which structure keeps, with its own weight, the upper one of the abovementioned sealing means at its place and allows thermal expansion of the insulating material. The sealing reached with the solution is, however, not completely satisfactory, because the sealing of the cover part in relation to the heating element of the drawing furnace and other parts of the furnace is allowed to vary. The solution presented in US patent 4547644 does not enable a precise control of gas flow inside the drawing furnace either.

Flow conditions of the gases inside the drawing furnace are an important factor affecting the quality of the fiber being manufactured. Typically the aim is to arrange the gas flow from up to down, in which case the speed difference between the gas flow and the fiber being formed is as small as possible and no turbulence is formed between them. There is a solution known from background art, wherein a gas flow upwards inside the drawing furnace is used, in which case the particles formed inside the furnace are directed upwards with said gas flow, and thus do not meet the downwards drawn fused quartz glass, forming the fiber.

The abovementioned solutions of background art have not, however, been able to solve the problems connected with the impurity particles in a totally satisfactory manner. Regardless of the good quality materials used in the heating elements and in other components of the drawing furnace and the special structure solutions developed for sealing the structures of the drawing furnace, some particles, which disturb the drawing of fiber, are still formed inside the furnace. Using a gas flow directed upwards causes problems in drawing fiber, when the drawing speeds are great, for example over 600 m/s.

The main purpose of the present invention is to present equipment to be used in the manufacture of optical fiber, with which equipment the sealing of the heating part of the furnace is improved and thus the travel of impurity particles to the inside of the drawing furnace and the fiber being formed in the furnace is prevented. In addition, with the invention, control of the flow of gases fed to the drawing furnace is significantly improved, as a result of which the gas flow surrounding the fiber being formed behaves well from the point of view of the fiber forming process.

To attain these purposes, the invention presents a drawing furnace as defined in independent claim 1.

The dependent claims present some preferred embodiments of the invention.

The basic idea of the invention is that when optical fiber is manufactured with a vertical drawing furnace, wherein the fiber preform is heated in the heating zone in such a manner, that thin fiber is formed of the molten glass stream being formed at the lower end of the fiber preform with gravity and/or downward drawing applied to the fiber, the cover part of said drawing furnace is fitted to the structure of the equipment in such a manner, that thermal expansion of the heating element of the drawing furnace cannot change the seating between the cover part and the heating element. The cover part is according to the invention, fitted mobile in relation to the frame part of the drawing furnace in such a manner, that the location of the cover part in relation to the upper edge of the tubular heating element remains constant when the length of the heating element changes as a result of temperature changes. Typically the length of the heating element of the drawing furnace increases approximately 5 mm when the temperature of the element increases from room temperature to a temperature of approximately 2000 °C.

Preferably said cover part is attached to the frame part of the drawing furnace with means, which press the cover part towards the heating element substantially with a constant force, regardless of the length of the heating element, in which case a constant force is directed also at the sealing between the cover part and the heating element, i.e. the inner tubes of the gas tube, and the sealing remains constant. Preferably the pressing force of said means can be adjusted. In an advantageous embodiment of the invention, the means according to the invention are implemented with spring-like structures placed outside the hot space of the drawing furnace.

With the sealing structure according to the invention it is possible to eliminate the indefiniteness in the sealing between the drawing furnace and its surroundings caused by thermal expansion, especially the thermal expansion of the heating element, still, however, allowing the thermal expansion of the heating element. Another significant advantage of the invention is that the gas flow channels of the drawing furnace and thus the gas flows themselves remain unchanged throughout the entire temperature area, in which case the gas can be fitted to flow in the drawing furnace at an optimal speed from the point of view of fiber formation, preferably at the drawing speed of the fiber being formed.

The following more detailed description of the invention, with examples, will more clearly illustrate, for anyone skilled in the art, preferred embodiments of the invention as well as advantages to be achieved with the invention in relation to background art.

In the following, the invention will be described in more detail with reference to the appended drawings, in which
- Fig. 1: shows in a side-view, in principle, an embodiment of the invention when the heating element of the drawing furnace is cold, and

- Fig. 2: shows in a side-view, in principle, the embodiment according to Fig. 1 when the heating element of the drawing furnace is hot.

The appended figures are principled and, for better clarity, details irrelevant to understanding the invention have been left out, such as the cooling channels in the upper part of frame part 11 of drawing furnace 10.

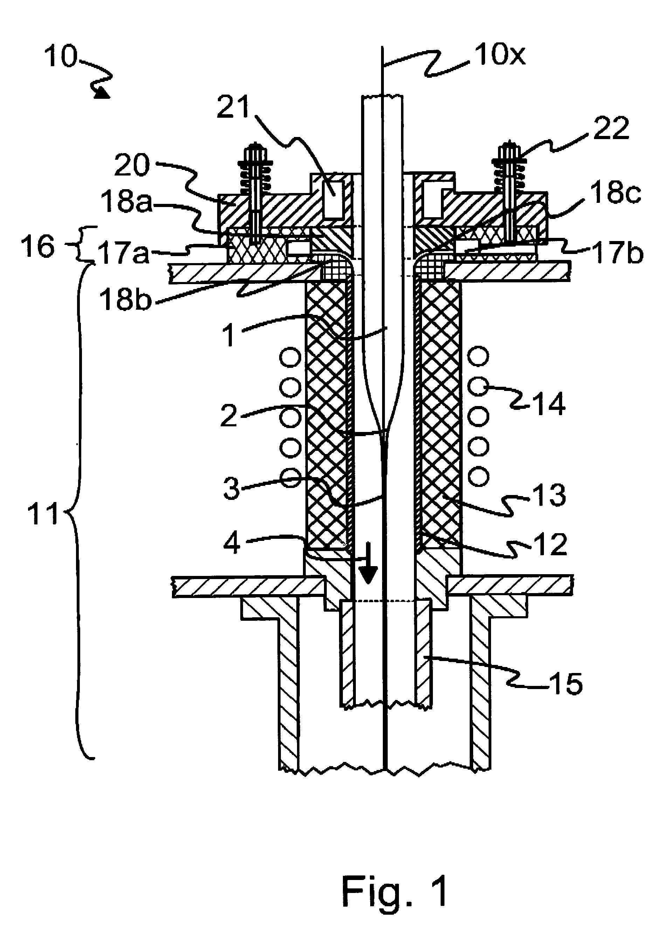

Fig.1 shows, in principle, the structure of the drawing furnace 10 used in manufacturing optical fiber 3 and the location of different parts of the drawing furnace in relation to each other when the drawing furnace is cold.

A quartz glass fiber preform 1, which is typically 50 - 100 mm in diameter and 500 - 2,000 mm in length, is placed vertically inside a tubular heating element 12. The material of the heating element 12 is typically graphite, which endures the temperatures of the process, which can be around 2000 °C, well. The heating element 12 is surrounded by an insulating layer 13, which can be, for example, porous graphite wool.

Induction coil 14 is arranged to heat the heating element 12 with electric induction, in which case a heating zone is formed against said coil, to which heating zone the lower end of fiber preform 1 is placed. Because of the heating effect of heating element 12, molten 2 is formed at the lower end of the fiber preform 1, which molten further forms to a thin, downwards moving fiber with gravity and/or drawing directed at fiber 3.

In the drawing direction of fiber 3 after the heating element 12, a so-called extension tube 15 is arranged to the drawing furnace 10, the purpose of which tube is to prevent the fiber from cooling too quickly. In order to manufacture good quality optical fiber 3 it is important, that the formed fiber is not subjected to a so-called cold shock. Here, cold shock means that stress states caused by too fast cooling remain in the crystal structure of the fiber 3 being formed, in which case the final crystal structure of the fiber remains imperfect. This weakens the optical properties of fiber 3 significantly, and also affects the mechanical strength of the fiber.

The upper part of the extension tube 15 is advantageously silica tube typically for the 100-500 mm long beginning part. The purpose of this part is to separate the heating element 12 in a high temperature from the lower parts of the drawing furnace 10 (extension tube 15). A silica tube is suited for this purpose because of its high heat resistance, in which case the silica tube itself does not need to be actively cooled, and fiber 3 is thus not subjected to cold shock. Instead of quartz, for example graphite can also be used as material for the extension tube 15. The formation of fiber 3 from fused quartz glass is still ongoing at the silica tube, so therefore a too steep temperature gradient when moving downwards from the area of influence of the heating element 12 would be harmful from the point of view of fiber formation by causing a non-desired cold shock to the fiber.

The downward flow 4 of inert gas, preferably argon gas, is advantageously arranged to the drawing furnace 10. Said gas flow 4 advances typically from the area of influence of the heating element 12 further to the extension tube 15.

In order to create the abovementioned gas flow 4, a gas tube 16 (i.e. gas supply means) is arranged to the upper part of the drawing furnace 10 according to the invention. Gas tube 16 is formed of an outer tube 17a (i.e. outer ring) and inner tubes 18a, 18b (i.e. inner rings) arranged inside the outer tube. It is advantageous to place the outer tube 17a and inner tubes 18a, 18b concentrically around the vertical axis 10x of the drawing furnace 10. The gas required for the gas flow 4 of the drawing furnace is fed from outside the furnace to a channel 17b formed on the outer tube 17a. Channel 17b is preferably placed to go around the vertical axis 10x of the drawing furnace 10 horizontally. The vertical axis 10x of the drawing furnace 10 refers to that vertical line of the drawing furnace, on which are the central line in height direction of the drawing space of the drawing furnace, the vertical line of the fiber preform 1, and the vertical line of the fiber 3 being formed.

The upper inner tube 18a and the lower inner tube 18b are surrounded by the outer tube 17 of the gas tube 16. The purpose of inner tubes 18a, 18b is to seal the space between the heating element 12 and the cover part 20 in such a manner, that the insulating layer 13 surrounding the heating element is not in connection with the inside of the furnace, in which state fiber 3 is formed from the fiber preform 1. In a way characteristic to the invention, a hole 18c is formed between the upper inner tube 18a and the lower inner tube 18b as a result of the design of the corresponding surfaces of the inner tubes. In an advantageous embodiment it is possible to form protrusions on the corresponding surfaces of the upper inner tube 18a and the lower inner tube 18b, which protrusions prevent contact between the corresponding surfaces on the entire surface area and, at the same time, the protrusions keep the distance between the tubes constant, in which case also the size of the hole 18c remains constant. It is very advantageous to design the hole 18c between inner tubes 18a, 18b such, that its opening towards the vertical axis 10x of the drawing furnace 10 goes around the vertical axis of the drawing furnace horizontally as a uniform circle. It is also possible to form the inner tubes 18a, 18b of the gas tube 16 from one uniform tube, in which case the gas hole 18c is formed in the said tube, for example, by machining. In addition, it is possible to form the inner tubes 18a, 18b of the gas tube 16 from more than two parts, in which case, for example in order to form gas hole 18c, separate intermediate parts can be used.

Channel 17b of the outer tube 17a of the gas tube 16 and the hole 18c between the inner tubes 18a, 18b are connected to each other, in which case gas can flow from the hole between the inner tubes through the channel of the outer tube to the inside of the drawing furnace, in which case gas flow 4 is created inside the heating element 12 and the extension tube 15.

It is advantageous to manufacture the inner tubes 18a, 18b from a material, whose thermal expansion is as small as possible at the temperature range used, it is especially preferable to use tubes manufactured of graphite. The thermal expansion of graphite tubes, whose height is typically around 10 mm, is, in practice, non-existent. For example, a graphite heating element 12 expands in the drawing furnace 10 on the temperature range used only about 5 mm, even though its total length is around 500 mm. Because of the substantially non-existent thermal expansion of the inner tubes 18a, 18b the hole 18c between the inner tubes remains substantially the same over the entire temperature-range, in which case arranging the gas flow 4 as desired can be easily arranged.

The outer tube 17a of the gas tube 16 is preferable to manufacture of a thermally and mechanically strong material, such as steel. The change in the size of the channel 17b of the outer tube 17a, because of thermal expansion, is irrelevant in practice, if the channel is dimensioned large enough, in which case the gas flow 4 inside the drawing furnace 10 can be kept as desired with the hole 18c between inner tubes 18a, 18b. It is preferable to form the outer tube 17a from one uniform piece, but the outer tube can also be formed of more pieces, if necessary.

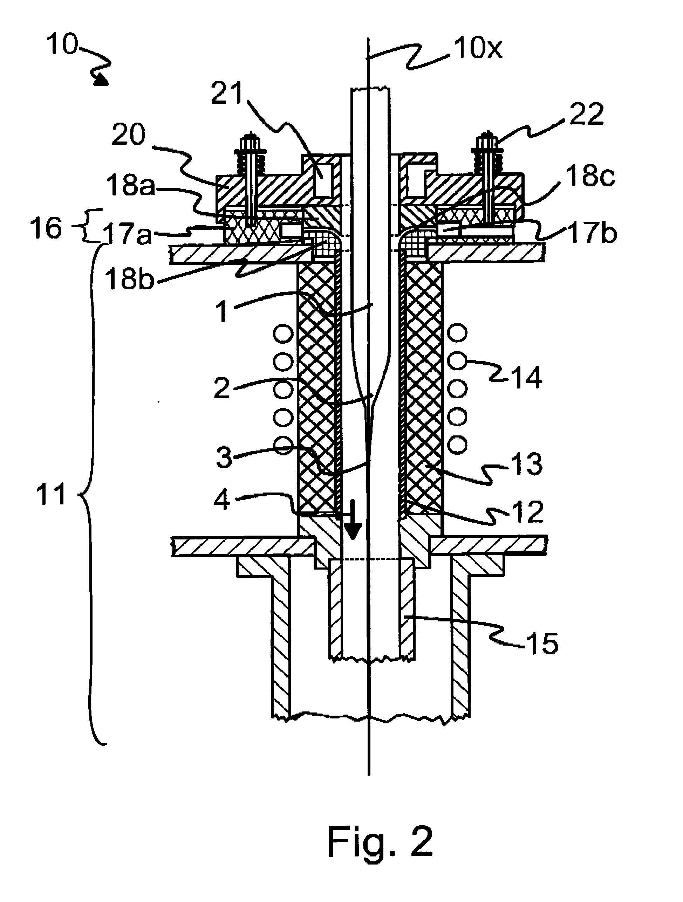

When using inner tubes 18a, 18b of the gas tube 16, which are made of material that substantially does not expand thermally, the holes 18c formed in them remain substantially constant in size when the temperature changes, if the pressing force affecting the inner tubes also remains substantially constant. Thus the gas flow 4 through the holes 18c also remains substantially constant. The vertical location of the holes in relation to the outer tube 17a of the gas tube 16 changes when the length of the heating element 12 changes, and this change is to be taken into account when forming the channel 17b of the outer tube 17a of the gas tube, in order to keep gas flow 4 as desired in different operating modes. In the advantageous embodiment according to the example of figures 1 and 2, the channel 17b of the outer tube 17a of the gas tube 16 is formed to be so wide, that it is connected to the hole between inner tubes 18a, 18b for the entire range of the length of heating element 12.

A cover part 20 is arranged over the gas tube 16 in the upper part of the drawing furnace 10, which part closes the connection of the heating element 12 and the insulating layer 13 up to the outside space of the drawing furnace. If necessary, it is possible to arrange cooling to the cover part 20 by using, for example, cooling channels 21 formed to the cover, in which channels a suitable medium is circled, such as cooling water. Cooling the cover part 20 prevents too much heat transferring to the other structures of the drawing furnace.

According to the invention, the cover part 20 is now fitted in relation to the gas tube 16 in such a manner, that the cover part can move vertically. It is advantageous to attach the cover part 20 to the gas tube 16 with flexible fastening means 22, for example by springs, which allow the cover part to move vertically. The change in the vertical length of the heating element 12 creates the vertical movement of the cover part 20, which change is created by the thermal expansion of the heating element 12 following the change of temperature. As a result of the change in the length of the heating element 12 the lower inner tube 18b arranged against the heating element moves vertically substantially a range corresponding to the change in length. In which case the upper inner tube 18a also moves vertically substantially the same range corresponding to the change in the length of the heating element 12. Thus the cover part 20 arranged above the gas tube 16, against the inner tube 18b, moves also vertically when the length of the heating element 12 varies. The movement of cover part 20 is substantially the same as the vertical length change of heating element 12 and the vertical movement of the inner tubes 18a, 18b of the gas tube 16, when the inner tubes substantially are not thermally expanded.

According to the basic idea of the invention, the cover part 20 is arranged in such a manner that a substantially constant force is directed at the inner tubes 18a, 18b between the cover part and heating element 12 in all the modes of operation of the drawing furnace 10. Thus the level of sealing of the upper part of the drawing furnace 10 remains constant in all modes of operation of the drawing furnace, and the level of sealing is also known. The substantially constant force directed at the inner tubes 18a, 18b between the cover part 20 and the heating element 12 is created with fastening means 22, which allow the cover part to move vertically. There can be one or more fastening means 22, preferably from four to six. Preferably the fastening means 22 are arranged symmetrically in relation to the vertical central axis 10x of the drawing furnace 10.

The fastening means 22 can be formed in several different ways. In an advantageous embodiment, a flexible fastening means 22 is formed of an arbor and a spring. The arbor is attached through the cover part 20 to the gas tube 16 and a spring is placed on top of the cover part 20 around the arbor, and a sheet is placed at the end of the spring. The sheet, which has a hole in the middle, is placed around the arbor in such a manner, that the sheet cannot withdraw from around the arbor. The locking of the sheet can be done by, for example, a screw nut at the end of the arbor. By changing the location of the sheet, the pressing force of the spring is affected and thus the pressing forces affecting the boundary surfaces of the inner tubes 18a, 18b. From the point of view of the desired function of the sealing, it is essential that the flexing area of the fastening means 22 covers at least the area, over which the length of the heating element 12 may vary. If the play of the fastening means 22 ends before the varying of the length of the heating element 12, this results in the pressing forces of the sealing changing.

In another advantageous embodiment, the fastening means 22 is formed of an arbor and a weight. First, the arbor is attached through the cover part 20 to the gas tube 16 in such a manner, that the cover part can move parallel to the arbor. After this, one or more weights are placed on top of the cover part 20 around the arbor. The total mass of cover part 20 and the weight creates a constant pressing force to the inner tubes 18a, 18b of the gas tube. It is possible for the length of the heating element to vary, and at the same time, to move the inner tubes 18a, 18b of the gas tube 16 and the cover part 20 vertically, without the pressing force directed at the sealing changing.

In one embodiment of the invention the pressing force of the cover part 20 is created pneumatically, and it is clear, that the invention is not dependent on the manner the pressing force is created.

Figure 2 presents, in principal, the drawing furnace 10 according to the embodiment of figure 1, and the mutual location of the different parts of the oven when the heating element 12 is hot and it is longer than in the rest position shown in figure 1 because of thermal expansion. Rest position refers to a state when the heating element 12 of the drawing furnace 12 is cold.

The length of the heating element 12 grows in relation to the length of the rest position when the temperature increases. When the vertical length of the heating element 12 has increased, also the inner tubes 18a, 18b of the gas tube 16 have moved upwards substantially the corresponding length. In the example, the cover part 20 of the drawing furnace 10 is attached flexibly in relation to frame 11, in which case also the cover part has moved upwards in relation to the frame part, substantially the range corresponding to the change in the length of the heating element 12. The sealing force between the cover part 20, the inner tubes 18a, 18b of the gas tube 16, and the heating element 12 is now equivalent to when the heating element is in the rest position, because the fastening means 22 direct a constant force at the cover part 20, irrespective of the vertical position of the cover part.

The pressing force, which affects the boundary surface between the cover part 20 of the drawing furnace 10 and the upper inner tube 18a, and the boundary surface between the upper inner tube and lower inner tube 18b, and the boundary surface between the heating element 12 and the lower inner tube remains substantially constant by the effect of the fastening means 22 over the entire range of the length of the heating element 12. Thus, because of the fastening means 22, which allow the vertical movement of the cover part 20, the sealing between the cover part and the upper inner tube 18a remains constant when the length of the heating element 12 changes, as well as the sealing between the heating element and the lower inner tube 18b.

When the length of the heating element 12 of the drawing furnace 10 varies, the distance between the outer tube 17a of the gas tube 16 and the cover part 20 also changes, which distance is substantially the same as the distance between the lower inner tube 18a and the insulating layer 13, which, for its part, is substantially the same as the change in the length of the heating element in comparison to the rest position.

The method of attaching the cover part 20 according to the invention is not dependent on the channels 17b of the gas tube 16 and the holes 18c used in feeding gas, nor on the cooling channel 21 of the cover part, but the method of attaching according to the invention can be used by retaining its basic idea also in such cover structures, where there are no channels, or in which the purpose of use is something other than the one presented in the example.

By combining the modes and equipment structures presented in connection with the different embodiments of the invention presented above, it is possible to provide various embodiments of the invention that fall within the scope of the claims. For example, the gas tube 20 presented in the embodiment can be connected to the same structure with either the cover part 20 or the frame part 11 of the drawing furnace 10, in which case the cover part is attached directly to the frame part.

## Claims

1. A drawing furnace (10) or the like for manufacturing optical (3) fiber from a vertical fiber preform (1), which drawing furnace comprises at least
- a preferably tubular heating element (12) surrounding the fiber preform (1), for heating the fiber preform,
- an outside insulating layer (13) of the heating element (12)
- a frame part (11) of the drawing furnace in order to place said heating element (12) and said insulating layer (13) in the drawing furnace (10),
- a gas supply means (16) fitted between a cover part (20) and said heating element (12) in order to feed gas to the gas area surrounding the fiber, preform
- the cover part (20) being arranged in order to close the area between said heating element (12) and said frame part (11) to insulate the insulating layer (13) and/or the area surrounding the insulating layer from the gas flow (4) surrounding the fiber preform, and
**characterized in that** the cover part (20) is further fitted mobile in relation to the frame part (11) of the drawing furnace (10) in such a manner that the location of the cover part in relation to the upper edge of the tubular heating element (12) remains constant when the length of the heating element (12) changes as a result of temperature changes and thus a force, which seals the gas supply means (16) to the end of the heating element, is substantially constant in all modes of operation of the drawing furnace (10).

2. Drawing furnace (10) according to claim 1, **characterized in that** the force between the cover part (20) and the heating element (12) can be adjusted.

3. Drawing furnace (10) according to any of the preceding claims, **characterized in that** the drawing furnace comprises fastening means (22) for pressing the cover part (20) substantially with a constant force towards the heating element (12).

4. Drawing furnace (10) according to claim 3, **characterized in that** one or more springs or the like are used as fastening means (22).

5. Drawing furnace (10) according to claim 3, **characterized in that** one or more means, whose pressing force is based on gravity, are used as fastening means (22).

6. Drawing furnace (10) according to claim 1, **characterized in that** the gas supply means (16) comprises one or more outer rings (17a) and one or more inner rings (18a, 18b) arranged inside the outer ring or rings, which outer rings and inner rings are arranged concentrically in relation to the fiber preform (1).

7. Drawing furnace (10) according to any of the preceding claims, **characterized in that** the gas flow (4) to the gas space surrounding the fiber preform (1) is arranged through channels (17b) and holes (18c) in the gas supply means (16), the openings of the holes opening to said gas space symmetrically around the fiber preform (1) substantially in a horizontal plane.

8. Drawing furnace (10) according to any of the preceding claims, **characterized in that** the gas flow (4) to the gas space surrounding the fiber preform (1) is arranged through the channels (17b) in the gas supply means (16) and one substantially uniform and horizontal hole (18c), the opening of the hole opening to said gas space surrounds the fiber preform (1) substantially over an entire circle.

9. Drawing furnace (10) according to claim 7 or 8, **characterized in that** the holes/hole (18c) are formed by the gas supply means (16) between the first inner ring (18a) and the second inner ring (18b).

10. Drawing furnace (10) according to claim 9, **characterized in that** the dimensions of the holes/hole (18c) in the gas supply means (16) remain substantially unchanged in all modes of operation of the drawing furnace (10).

## Patentansprüche

1. Ziehofen (10) oder dergleichen für die Herstellung optischer (3) Fasern aus einer vertikalen Faservorform (1), wobei der Ziehofen zumindest
- ein vorzugsweise rohrförmiges Heizelement (12) für das Erhitzen der Faservorform, welches die Faservorform (1) umgibt,
- eine äußere isolierende Schicht (13) des Heizelements (12),
- einen Rahmenteil (11) des Ziehofens, um das Heizelement (12) und die isolierende Schicht (13) im Ziehofen (10) zu platzieren,
- ein Gaszufuhrmittel (16) eingepasst zwischen einem Abdeckteil (20) und dem Heizelement (12), um Gas zu dem die Faservorform umgebenden Gasraum zuzuführen,
- den Abdeckteil (20), der angeordnet ist, um den Raum zwischen dem Heizelement (12) und dem Rahmenteil (11) zu schließen, um die isolierende Schicht (13) und/oder den die isolierende Schicht umgebenden Raum vom die Faservorform umgebenden Gasstrom (4) zu isolieren, umfasst und
der **dadurch gekennzeichnet ist, dass** der Abdeckteil (20) ferner in Bezug auf den Rahmenteil (11) des Ziehofens (10) in einer Weise beweglich angepasst ist, dass die Anordnung des Abdeckteils in Bezug auf die obere Kante des rohrförmigen Heizelements (12) konstant bleibt, wenn sich die Länge des Heizelements (12) als Ergebnis von Temperaturänderungen ändert und daher eine Kraft, die das Gaszufuhrmittel (16) mit dem Ende des Heizelements abdichtet im Wesentlichen in allen Betriebsarten des Ziehofens (10) konstant ist.

2. Ziehofen (10) nach Anspruch 1, **dadurch gekennzeichnet, dass** die Kraft zwischen dem Abdeckteil (20) und dem Heizelement (12) eingestellt werden kann.

3. Ziehofen (10) nach irgendeinem der vorhergehenden Ansprüche, **dadurch gekennzeichnet, dass** der Ziehofen Befestigungsmittel (22) für das Anpressen des Abdeckteils (20) mit im Wesentlichen einer konstanten Kraft in Richtung des Heizelements (12) umfasst.

4. Ziehofen (10) nach Anspruch 3, **dadurch gekennzeichnet, dass** eine oder mehrere Federn oder dergleichen als Befestigungsmittel (22) verwendet werden.

5. Ziehofen (10) nach Anspruch 3, **dadurch gekennzeichnet, dass** ein oder mehrere Mittel, deren Presskraft auf der Schwerkraft basiert, als Befestigungsmittel (22) verwendet werden.

6. Ziehofen (10) nach Anspruch 1, **dadurch gekennzeichnet, dass** das Gaszufuhrmittel (16) einen oder mehrere äußere Ringe (17a) und einen oder mehrere innere Ringe (18a, 18b), die innerhalb des äußeren Rings/oder der äußeren Ringe angeordnet sind, umfasst, welche äußeren Ringe und inneren Ringe konzentrisch in Bezug auf die Faservorform (1) angeordnet sind.

7. Ziehofen (10) nach irgendeinem der vorhergehenden Ansprüche, **dadurch gekennzeichnet, dass** der Gasstrom (4) zu dem die Faservorform (1) umgebenden Gasraum durch Kanäle (17b) und Löcher (18c) im Gaszufuhrmittel (16) angeordnet ist, wobei sich die Öffnungen der Löcher zum Gasraum symmetrisch um die Faservorform (1) in einer im Wesentlichen horizontalen Ebene öffnen.

8. Ziehofen (10) nach irgendeinem der vorhergehenden Ansprüche, **dadurch gekennzeichnet, dass** der Gasstrom (4) zu dem die Faservorform (1) umgebenden Gasraum durch Kanäle (17b) im Gaszufuhrmittel (16) und ein im Wesentlichen einheitliches und horizontales Loch (18c) vorgesehen ist, wobei die Öffnung des Loches, das sich in den Gasraum öffnet, die Faservorform (1) über im Wesentlichen einen kompletten Kreis umgibt.

9. Ziehofen (10) nach Anspruch 7 oder 8, **dadurch gekennzeichnet, dass** die Löcher/das Loch (18c) durch das Gaszufuhrmittel (16) zwischen dem ersten inneren Ring (18a) und dem zweiten inneren Ring (18b) gebildet sind.

10. Ziehofen (10) nach Anspruch 9, **dadurch gekennzeichnet, dass** die Dimensionen der Löcher/des Lochs (18c) im Gaszufuhrmittel (16) in allen Betriebsarten des Ziehofens (10) im Wesentlichen unverändert bleiben.

## Revendications

1. Four tirant (10) ou similaire pour fabriquer une fibre optique (3) à partir d'une préforme de fibre verticale (1), lequel four tirant comprend au moins
- un élément de chauffe de préférence tubulaire (12) entourant la préforme à fibre (1), pour chauffer la préforme à fibre,
- une couche isolante extérieure (13) de l'élément de chauffe (12)
- une partie de châssis (11) du four tirant afin de placer ledit élément de chauffe (12) et ladite couche isolante (13) dans le four tirant (10),
- des moyens de fourniture de gaz (16) installés entre une partie de couverture (20) et ledit élément de chauffe (12) pour alimenter en gaz la zone de gaz entourant la préforme à fibre,
- la partie de couverture (20) étant disposée pour fermer la zone entre ledit élément de chauffe (12) et ladite partie de châssis (11) pour isoler la couche isolante (13) et/ou la zone entourant la couche isolante du flux de gaz (4) entourant la préforme à fibre, et
**caractérisé en ce que** la partie de couverture (20) est en outre installée mobile par rapport à la partie de châssis (11) du four tirant (10) de manière à ce que l'endroit de la partie de couverture par rapport au bord supérieur de l'élément de chauffe tubulaire (12) reste constant lorsque la longueur de l'élément de chauffe (12) change suite à des changements de température, et ainsi une force, qui étanchéifie le moyen de fourniture de gaz (16) à l'extrémité de l'élément de chauffe, est sensiblement constante dans tous les modes d'opération du four tirant (10).

2. Four tirant (10) selon la revendication 1, **caractérisé en ce que** la force entre la partie de couverture (20) et l'élément de chauffe (12) peut être réglée.

3. Four tirant (10) selon l'une quelconque des revendications précédentes, **caractérisé en ce que** le four tirant comprend des moyens de fixation (22) pour comprimer la partie de couverture (20) sensiblement avec une force constante vers l'élément de chauffe (12).

4. Four tirant (10) selon la revendication 3, **caractérisé en ce qu'**un ou plusieurs ressorts ou similaire sont utilisés comme moyens de fixation (22).

5. Four tirant (10) selon la revendication 3, **caractérisé en ce qu'**un ou plusieurs moyens, dont la force de pression est basée sur la gravité, sont utilisés comme moyens de fixation (22).

6. Four tirant (10) selon la revendication 1, **caractérisé en ce que** les moyens de fourniture de gaz (16) comprennent un ou plusieurs anneaux extérieurs (17a) et un ou plusieurs anneaux intérieurs (18a, 18b) disposés à l'intérieur de l'anneau ou des anneaux extérieurs, lesquels anneaux extérieurs et anneaux intérieurs sont disposés de manière concentrique en relation à la préforme à fibre (1°).

7. Four tirant (10) selon l'une quelconque des revendications précédentes, **caractérisé en ce que** le flux de gaz (4) vers l'espace de gaz entourant la préforme à fibre (1) est disposé à travers des canaux (17b) et des trous (18c) dans le moyen de fourniture de gaz (16), les ouvertures des trous ouvrant vers ledit espace de gaz de manière symétrique autour de la préforme à fibre (1) sensiblement dans un plan horizontal.

8. Four tirant (10) selon l'une quelconque des revendications précédentes, **caractérisé en ce que** le flux de gaz (4) vers l'espace de gaz entourant la préforme à fibre (1) est disposé à travers des canaux (17b) dans le moyen de fourniture de gaz (16) et un orifice sensiblement uniforme et horizontal (18c), l'ouverture de l'orifice ouvrant vers ledit espace de gaz entourant la préforme à gaz (1) sensiblement sur un cercle entier.

9. Four tirant (10) selon la revendication 7 ou 8, **caractérisé en ce que** le ou les trous (18c) sont formés par le moyen de fourniture de gaz (16) entre le premier anneau intérieur (18a) et le second anneau intérieur (18b).

10. Four tirant (10) selon la revendication 9, **caractérisé en ce que** les dimensions du ou des trous (18c) dans le moyen de fourniture de gaz (16) restent sensiblement inchangées dans tous les modes d'opération du four tirant (10).
